# EUROPEAN PATENT APPLICATION

(11) **EP 3 981 676 A1**
(43) Date of publication of application: **13.04.2022**
(21) Application number: 20817882.2
(22) Date of filing: 03.06.2020
(51) Int. Cl.: B62J 9/00, B62H 5/00

(54) **CONTAINER FOR VEHICLES, FOR STORING AND TRANSPORTING OBJECTS**

(30) Priority: 04.06.2019 ES 201930504
(71) Applicant: VLV Disenos Industriales, S.L., 31011 Pamplona (ES)
(72) Inventor: GUELBENZU BLASCO, Javier, 31011 Pamplona (ES)
(74) Representative: Toro Gordillo, Ignacio Maria
(86) International application number: PCT/ES2020/070369
(87) International publication number: WO 2020/245485

(57) **Abstract**

The invention relates to a container for vehicles, for storing and transporting objects, which is formed by a receptacle, with a corresponding closure cover hinged to the container by means of L-shaped arms that are firmly joined at one end to the inside face of the cover and hinged at the opposite end, by means of hinge pins, with respect to respective brackets projecting from the inside face of the container, wherein, in a closed position, the hinge means are concealed inside the container, with the particularity that the closure means are in the form of an electronic lock and a closure mechanism or ratchet that are internally connected over the opening of the cover and the main body of the container, the electronic lock being provided with wireless control means for opening. The system comprises a mechanically engaging security device, which activates when the container is forced open.

## Description

### TECHNICAL FIELD

The present invention relates to a container for storing and transporting objects for vehicles such as cars, motorcycles, bicycles, and the like, constituting a type of receptacle or carrier with a cover that can be fixed to the chassis of the vehicle to keep belongings such as helmets, gloves, raincoats, or other items.

The object of the invention is to provide safe storage means in which both the hinge and the closing and opening means are inaccessible from the outside, thereby preventing the container from being tampered with.

### BACKGROUND OF THE INVENTION

Containers that tend to include a flip cover with the corresponding hinge means and security locking device are known.

Devices of this type present the problem that both the hinge means and closure means can be seen from the outside, so they can be forced open rather easily allowing access to and thieving of the contents of the device which is normally used for keeping helmets and other relatively expensive equipment that is, accordingly, highly susceptible to theft.

### DESCRIPTION OF THE INVENTION

The proposed container for storing and transporting objects for vehicles such as cars, motorcycles, bicycles, and the like, solves the problems set forth above in a completely satisfactory manner based on a simple but effective solution, preventing the manipulation of the device, since neither the hinge means nor the closure and locking means are accessible.

To that end and more specifically, the container of the invention is characterized in that its hinge means are formed from a series of L-shaped arms which are hinged on one end to brackets established for that purpose on the inner edge of the container and hinged at the opposite end to the inside face of the cover, such that, said hinge is completely concealed and inaccessible from the outside when the device is closed, where said device cannot therefore be manipulated.

A similar situation arises in the case of the closing and opening means which are formed from an electronic lock which is controlled by means of radiofrequency, such that the lock is not visible from the outside, having a ratchet that can engage an inside locking device, with said opening being controlled through a control, mobile telephone, RFID card, or the like.

Similarly, the lock could also be wirelessly connected to the vehicle start-up system, such that it is only accessible with the vehicle started up.

In addition to pivoting, the hinge elements, as a result of their L-shaped configuration, subject the cover to a translation movement, causing the cover to fits snugly in the opening of the main body of the container.

The electronic lock will be coded and electronically activated either through the power supply of a rechargeable battery or through direct connection to the battery of the vehicle in which it is installed, such that when the system is always locked when it does not have electrical power.

Optionally, the device may incorporate, associated with its control electronics, telemetric geolocation and alarm management means against possible cases of theft which may occur, where said device may likewise offer connection ports for recharging other electronic devices or recharging the actual internal battery through the connection thereof to the grid, small solar panels, dynamos/alternators, or any other conventional recharging means.

Ultimately, the invention relates to a container for storing and transporting objects in which the access and hinge means are inaccessible from the outside.

### BRIEF DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:
Figure 1 shows a perspective view of a container for storing and transporting objects for vehicles such as cars, motorcycles, bicycles, and the like, made according to the object of the present invention in an open position.
Figure 2 shows a view similar to that of Figure 1, but corresponding to an embodiment variant in which the control electronics of the device is internally isolated in a specific casing.

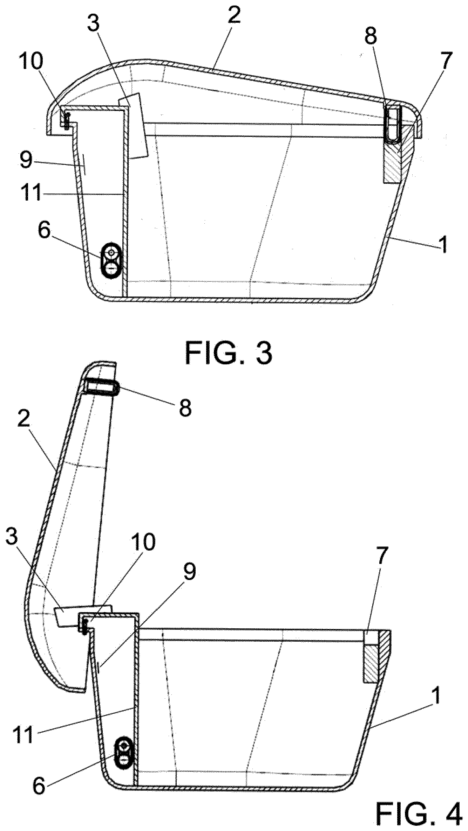

Figure 3 shows a cross-sectional view of the container in a closed position.
Figure 4 shows a cross-sectional view of the container in an open position.

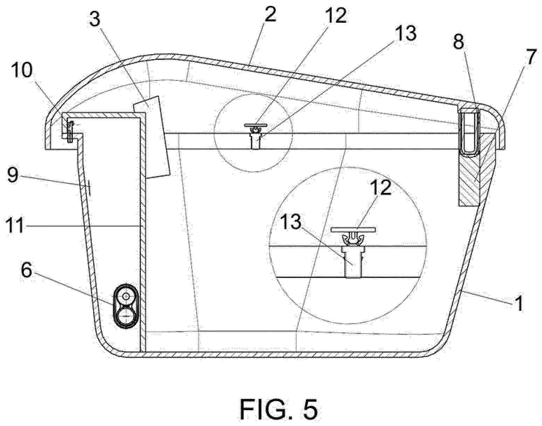

Finally, Figure 5 shows a cross-sectional view of the container with the security devices being seen.

### PREFERRED EMBODIMENT OF THE INVENTION

In view of the mentioned figures, it can be seen how the container of the invention is made up of a receptacle or container (1) per se, with a corresponding closure cover (2), this cover being hinged to the container by means of L-shaped arms (3) that are firmly joined at one end to the inside face of the cover and hinged at the opposite end, by means of hinge pins (5), with respect to respective brackets (4) projecting from the inside face of the container (1), such that, in a closed position, this entire assembly is perfectly concealed inside the device, being completely inaccessible, and therefore tamper-proof.

The device includes one or more supply batteries (6) powering the control electronics of an electronic lock (7) located on the inside face of the edge of the opening of the main body of the container (1) with respect to which a ratchet (8), likewise projecting from the inside face of the cover (2), engages, so in a closed situation, this assembly is likewise concealed and inaccessible from the outside.

The control electronics (9) of the lock (7) comprises coded radiofrequency communication means in order to allow blocking and unblocking the electronic lock (7), such that it can be operated through a mobile telephone, RFID card or chip, remote control, or any wireless means.

The system has a engaging security device (12) (13) as shown in Figure 5 which is activated, as a result of a mechanical engagement, when the container is forced open. Said action of forcing the container open activates sensors which generate and send a signal to the system, automatically driving locking devices (8) which block the opening of the cover (2). The locking devices (8) can only be unblocked by passing the coded radiofrequency communication means being used. This device is inside the container, so it is impossible to manipulate same.

Said control electronics (9) can incorporate geolocation means, as well as an alarm circuit.

Although the device has been envisaged to include its own rechargeable batteries, having to that end at least one recharging port which may likewise be used for recharging other electronic devices when the battery is charged, the control electronics could likewise be powered by the actual battery of the vehicle, as well as by any other conventional recharging means, such that the lock is always locked in the event of an absence of electric supply.

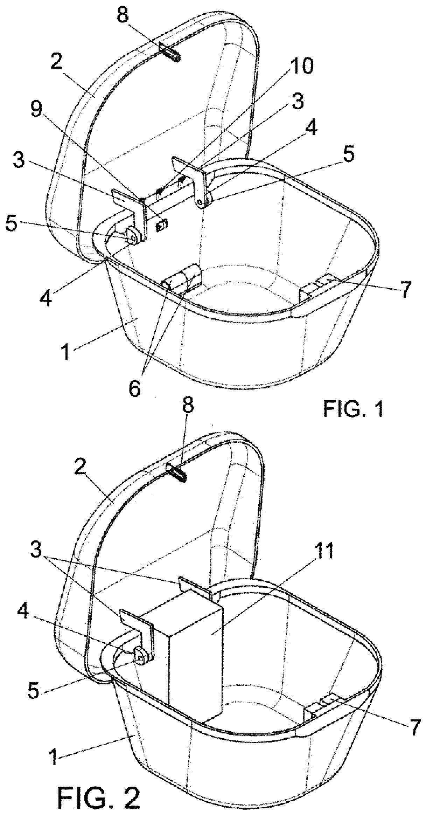

Lastly, it must be pointed out that, as can be seen in Figure 2, the control electronics and power supply can be arranged in an independent inside casing (11) that is only accessible from the inside of the device.

## Claims

1. A container for storing and transporting objects for vehicles such as cars, motorcycles, bicycles, and the like, of the type incorporating a receptacle or container (1) per se, with a corresponding flip closure cover (2) provided with closure means, **characterized in that** the closure cover (2) is hinged to the container by means of L-shaped arms (3) that are firmly joined at one end to the inside face of the cover and hinged at the opposite end, by means of hinge pins (5), with respect to respective brackets (4) projecting from the inside face of the container (1), such that, in a closed position, the hinge means are concealed inside the container, with the particularity that the closure means are in the form of an electronic lock (7) and a ratchet (8) that are internally connected over the opening of the cover and the main body of the container, electronic lock (7) being provided with wireless control means for opening.

2. The container for storing and transporting objects for vehicles such as cars, motorcycles, bicycles, and the like, according to claim 1, **characterized in that** the system has a mechanically engaging security device (12) (13), which activates when the container is forced open, generating another signal which creates and sends another signal to the system, automatically driving locking devices which block the opening of the container, and which is deactivated with the same code for opening the assembly.

3. The container for storing and transporting objects for vehicles such as cars, motorcycles, bicycles, and the like, according to claim 1, **characterized in that** the wireless control means for opening the electronic lock (7) are in the form of a chip or RFID card, a mobile telephone, or a remote control.

4. The container for storing and transporting objects for vehicles such as cars, motorcycles, bicycles, and the like, according to claim 1, **characterized in that** the wireless control means are in the form of control electronics (9) provided with geolocation means and/or an alarm circuit.

5. The container for storing and transporting objects for vehicles such as cars, motorcycles, bicycles, and the like, according to the preceding claims, **characterized in that** the control electronics (9) are assisted by one or more internal rechargeable batteries (6).

6. The container for storing and transporting objects for vehicles such as cars, motorcycles, bicycles, and the like according to claims 1 to 3, **characterized in that** the control electronics (9) are connected to the actual battery of the vehicle in which the container is installed.

7. The container for storing and transporting objects for motorcycles and the like according to claims 1 to 4, **characterized in that** it includes ports for recharging the battery or batteries (6) through the connection thereof to the grid or to an external generator device such as a small solar panel, dynamo, alternator, or the like.

8. The container for storing and transporting objects for motorcycles and the like according to claims 1 to 4, **characterized in that** it includes ports for connecting and recharging other electrical devices through the actual internal battery of the device.

9. The container for storing and transporting objects for motorcycles and the like according to preceding claims, **characterized in that** the control electronics and power supply of the device is housed in an inside casing (11) accessible from the inside of the container.
